# EUROPÄISCHE PATENTSCHRIFT

(11) **EP 3 101 385 B1**
(45) Veröffentlichungstag und Bekanntmachung des Hinweises auf die Patenterteilung: **07.10.2020**
(21) Anmeldenummer: 16163678.2
(22) Anmeldetag: 04.04.2016
(51) Int. Cl.: G01B 21/04, G01B 9/04, G02B 21/00, G01B 11/02, G01B 7/02, G02B 21/24

(54) **VORRICHTUNG UND VERFAHREN ZUR ERFASSUNG VON OBERFLÄCHENTOPOGRAPHIEN**
DEVICE AND METHOD FOR DETECTING SURFACE TOPOGRAPHIES
DISPOSITIF ET PROCEDE DE DETECTION DE TOPOGRAPHIES DE SURFACE

(30) Priorität: 05.06.2015 DE 102015108912
(43) Veröffentlichungstag der Anmeldung: 07.12.2016
(73) Patentinhaber: Carl Zeiss Microscopy GmbH, 07745 Jena (DE)
(72) Erfinder: LIPPERT, Helmut, Dr., 07745 Jena (DE); LANGHOLZ, Nils, Dr., 99510 Apolda (DE); KALKBRENNER, Thomas, Dr., 07745 Jena (DE); WOLLESCHENSKY, Ralf, 07743 Jena (DE); REISCHER, Franz, Dr., 37081 Göttingen (DE)
(74) Vertreter: Schiffer, Axel Martin

(56) Entgegenhaltungen:
- EP-A1- 2 789 968
- DE-A1-102006 044 235
- DE-A1-102012 009 836
- US-A1- 2013 155 413

## Beschreibung

Die vorliegende Erfindung betrifft in einem ersten Gesichtspunkt eine Vorrichtung zur Erfassung von Oberflächentopographien nach dem Oberbegriff des Anspruchs 1. In einem weiteren Gesichtspunkt bezieht sich die Erfindung auf ein Verfahren zur Erfassung von Oberflächentopographien nach dem Oberbegriff des Anspruchs 10.

Eine gattungsgemäße Vorrichtung weist ein optisches Mikroskop zum mikroskopischen Erfassen einer Topographie einer Oberfläche einer Probe in Richtung einer Höhenkoordinate auf, wobei die Topographie der Oberfläche in einer zeitlichen Abfolge von Einzelmessungen gewonnen wird. Außerdem ist eine Probenhalterung zum Halten der Probe vorhanden. Bei einem gattungsgemäßen Verfahren wird von einer Oberfläche einer Probe in einer zeitlichen Abfolge von Einzelmessungen mit einem optischen Mikroskop eine Topographie der Oberfläche in Richtung einer Höhenkoordinate erhalten. Eine gattungsgemäße Vorrichtung und ein gattungsgemäßen Verfahren ist beispielsweise beschrieben in DE 10 2012 009 836.

Als ein Standardverfahren für die Charakterisierung von technischen Oberflächen und insbesondere für die Ableitung von Rauheitsmesswerten sowie Topographien wird heute als Standardverfahren die konfokale Mikroskopie eingesetzt. Dieses Verfahren beschreiben beispielsweise Rahlves, Seewig in "Optisches Messen technischer Oberflächen", Beuth Verlag GmbH, Berlin, 2009.

Bei vielen konfokalen Systemen findet ein Abtasten der Probe in allen drei Raumrichtungen statt, das heißt es handelt sich um punktscannende Systeme, bei denen ein optischer Strahl in xy-Richtung über die Probe geführt wird. Zur Ableitung der Höheninformation wird zum anderen eine Bewegung der Probe relativ zur Detektoreinheit, also in z-Richtung, benötigt. Aus dem Intensitätsmaximum in Abhängigkeit von der z-Position kann für jeden x/y-Ort die Höheninformation und damit die Topographie abgeleitet werden. Zu berücksichtigen ist bei diesen Verfahren und diesen Vorrichtungen, dass eine vergleichsweise lange Zeit benötigt wird, um mit Hilfe des Rasterscans eine 3D-Topographie zu erhalten. Problematisch ist insbesondere, dass es während der xy-Scans, bei welchen eine fixierte geometrische Anordnung zwischen der Probe und dem optischen Mikroskop vorliegt, durch äußere Stöße oder Schwingungen zu unkontrollierten Bewegungen des optischen Aufbaus relativ zur Probe kommen kann, wodurch die Messergebnisse verfälscht werden. Zwar können Nachteile des xy-Rasterscans teilweise durch sogenannte konfokale Weitfeldsysteme umgangen werden, bei denen Flächenkameras zum Einsatz kommen und die einen hohen Grad an Parallelisierung aufweisen. Beispiele hierfür sind das Spinning-Disk-Verfahren mit Nipkow-Scheibe, bei dem mehrere Punkte quasi gleichzeitig nach dem konfokalen Prinzip detektiert werden. Gleichwohl kann es auch hier während einer Aufnahme bei konstanter geometrischer Ausrichtung zwischen Probe und optischem Mikroskop zu störenden Bewegungen kommen.

EP 2 789 968 A1 bezieht sich auf eine gattungsgemäße Vorrichtung und ein gattungsgemäßes Verfahren, bei dem seitlich benachbart zu einem Mikroskopobjektiv 30 mit einer Laser-Messeinrichtung 50 (Referenzsensor) ein Abstand zwischen einer Probenhalterung 10 und dem Mikroskopkörper 20 gemessen wird.

US 2013/155413 A1 betrifft eine gattungsgemäße Vorrichtung und ein gattungsgemäßes Verfahren. Auch hier wird, beispielsweise mit der Anordnung in Figur 40, mit optischen Mitteln (Referenzsensor 4570) ein Abstand zwischen einer Pro-benhalterung 4175 und einem Mikroskopaufbau gemessen. Dabei wird der Abtaststrahl des optischen Referenzsensors 4570 in den mikroskopischen Strahlengang eingespiegelt.

Gegenstand von DE 10 2006 044235 A1 ist eine gattungsgemäße Vorrichtung und ein gattungsgemäßes Verfahren, bei dem zum Bestimmen eines Abstands zwischen einem Mikroskopobjektiv und einer Probenhalterung ein kapazitiver Abstandssensor verwendet wird.

Als eine **Aufgabe** der Erfindung kann angesehen werden, eine Vorrichtung zur Erfassung von Oberflächentopographien zu schaffen und ein Verfahren zur Erfassung von Oberflächentopographien anzugeben, bei welchen im Vergleich zum Stand der Technik genauere Messergebnisse möglich sind.

Diese Aufgabe wird durch die Vorrichtung mit den Merkmalen des Anspruchs 1 und durch das Verfahren mit den Merkmalen des Anspruchs 10 gelöst.

Die Vorrichtung der oben genannten Art ist erfindungsgemäß dadurch weitergebildet, dass ein Referenzsensor vorhanden ist, zum Messen von Änderungen eines Höhenabstands zwischen dem Mikroskop und der Probenhalterung und dass eine Steuer- und Auswerteeinheit vorhanden ist zum Verarbeiten von Messdaten des Mikroskops und des Referenzsensors.

Das Verfahren der oben angegebenen Art ist erfindungsgemäß dadurch weitergebildet, dass während der zeitlichen Abfolge von Einzelmessungen mit einem Referenzsensor Änderungen eines Höhenabstands zwischen dem Mikroskop und einer Probenhalterung wiederholt bestimmt werden.

Vorteilhafte Ausführungsbeispiele der erfindungsgemäßen Vorrichtung und bevorzugte Varianten des erfindungsgemäßen Verfahrens werden im Folgenden insbesondere im Zusammenhang mit den abhängigen Ansprüchen und den beigefügten Figuren beschrieben.

Als ein Kerngedanke der vorliegenden Erfindung kann angesehen werden, eine Anfälligkeit der Mikroskopiemethoden gegenüber äußeren Bewegungseinflüssen dadurch zu vermeiden, dass zeitlich parallel zum eigentlichen Messvorgang, also der Bestimmung einer Oberflächentopographie durch eine Mehrzahl von Einzelmessungen, eine sich wiederholende Referenzmessung durchgeführt wird. Die Ergebnisse dieser Referenzmessung können in das eigentliche Messergebnis, das heißt die Oberflächentopographie, miteingearbeitet werden oder können dazu dienen, die Messvorrichtung stabil zu halten. Die Ergebnisse der Referenzmessung können auch dadurch verwertet oder mit eingearbeitet werden, dass Messergebnisse der Bestimmung der Oberflächentopographie verworfen werden, wenn die Referenzmessung einen Abstandswert liefert, der außerhalb eines als zulässig definierten Intervalls liegt. Einzelne Messergebnisse der Oberflächentopographie können demnach verworfen werden.

Als Oberflächentopografie oder Oberflächentopografiedaten wird für die vorliegende Anmeldung die Zuordnung einer Höhe, das heißt eines z-Koordinatenwerts, für alle Paare von Punkten x, y in einem bestimmten Bereich der Probe verstanden.

Die vorliegende Erfindung kann mit besonderem Vorteil eingesetzt werden bei der Reflexionsmikroskopie im Auflicht, für die Charakterisierung und die Messung von Oberflächen und insbesondere für Rauigkeitsmessungen. Die erfindungsgemäße Vorrichtung und das entsprechende Verfahren ermöglichen es, äußere Einflüsse wie Schwingungen, Stöße und ähnliches zu erfassen und mit Hinblick auf das Messergebnis entsprechend zu berücksichtigen. Das gesamte Messsystem weist daher eine besondere Robustheit gegenüber äußeren Einflüssen auf.

Es folgt ein Überblick über mikrokopische Verfahren, bei denen die Erfindung nutzbringend zum Einsatz kommen kann. Ebenso wie bei den bereits erwähnten Verfahren, bei denen eine Nipkow-Scheibe zum Einsatz kommt, funktionieren Verfahren, bei denen statt einer Nipkow-Scheibe eine andersartige schnell schaltbare Blende oder ein schnell schaltbares Mikrodisplay zum Einsatz kommt, wie beim CSM700 von Carl Zeiss, welches auf einem Multilinienscan mit digital-konfokaler Detektion beruht. Auch hier kann es während einer Aufnahme bei konstanter geometrischer Ausrichtung zwischen Probenkörper und Sensoreinheit zu störenden Bewegungen kommen, weshalb die Erfindung vorteilhaft einsetzbar ist. Dies gilt insbesondere, wenn für eine z-Positionierung mehrere Aufnahmen gemacht werden sollten, was beispielsweise der Fall sein kann, wenn eine Gesamtaufnahme von hoher Dynamik durch Kombination von Aufnahmen unterschiedlicher Belichtungszeit erzielt werden soll.

Weiterhin existieren auf strukturierter Beleuchtung basierende konfokalen Weitfeldsysteme. Hier wird für jeden z-Wert ein konfokales Schnittbild errechnet aus Bildern, die mit einer z.B. durch ein Gitter gegebenen strukturierten Beleuchtung aufgenommen wurden. In der Regel kann dabei auch das Weitfeldbild erhalten werden. Es wird keine Lochblendenanordnung in der Detektion benötigt. Ein Beispiel hierfür ist das von Carl Zeiss vertriebene ApoTome-Verfahren, bei dem ein Gitter mit unterschiedlichen Phasenlagen auf die Proben abgebildet wird. Da Intensitätsmodulationen in Abhängigkeit von der Phasenlage nur für fokale Bildanteile vorliegen, kann hieraus ein optisches Schnittbild errechnet werden. Dieses Verfahren ist auch für die Vermessung von technischen Oberflächen geeignet. Bei einem anderen Verfahren werden nur zwei Gitterphasen in der Beleuchtung eingesetzt, wobei die Phasen zeitlich sequentiell durch ein Umschalten von Lichtquellen erfasst werden. Dieses Verfahren ist in DE 10 2007 018 048 A1 beschrieben.

Bei einer Streifenprojektion wird ein Streifenmuster unter einem Triangulationswinkel auf eine Probenoberfläche projiziert, so dass aus der Deformation des Musters eine Höheninformation abgeleitet werden kann. In der Regel werden auch hier unterschiedlichen Phasenmuster erzeugt, um die Oberfläche vollständig zu erfassen.

Letztlich ist allen auf strukturierter Beleuchtung basierenden Systemen gemein, dass auch hier während der Änderung des Phasenmusters Vibrationen einen störenden Einfluss auf das Messergebnis nehmen können. Die Erfindung kann deshalb überall dort vorteilhaft eingesetzt werden.

Verwandt ist auch das Verfahren des von der Carl Zeiss vertriebenen VivaTomes, das eine sich kontinuierlich ändernde strukturierte Beleuchtung verwendet und das optische Schnittbild aus zwei parallel aufgenommenen Bildern errechnet, bei denen eines außerfokale und fokale und das andere nur außerfokale Anteile enthält. Ein Vorteil dieser auf strukturierter Beleuchtung basierenden Verfahren ist, dass parallel zum konfokalen Bild auch ein Weitfeldbild quasi in einem Schuss erhalten werden kann. Für das verbleibende Problem, dass äußere Bewegungen stören, wenn bei spielsweise bei einer z-Position mehrere Aufnahmen gemacht werden sollen, schafft die Erfindung Abhilfe.

Es existieren noch andere Weitfeld-Methoden, mit denen optische Schnitte erzeugt werden können. Hier ist zum einen die sogenannte Fokus-Variation zu nennen, bei welcher die Bildschärfe in Abhängigkeit von z ausgewertet wird, um hieraus ähnlich dem konfokalen Fall ein Maximum zu errechnen. Es werden damit auch räumliche Informationen herangezogen. Ähnlich einzuordnen ist das erst kürzlich etablierte sogenannte HiLo-Verfahren, bei dem Weitfeld-Bilder mit und ohne Strukturierung aufgenommen werden, um hieraus durch den geschickten Einsatz räumlicher Bandpass-Filter ein optisches Schnittbild zu erhalten. Die Strukturierung kann dabei auch auf einem Speckle-Muster basieren. Bekannt ist auch ein Verfahren, bei welchem durch Ausnutzen der Polarisation das Verfahren der strukturierten Beleuchtung zum Einsatz kommt. Werden statt der Polarisation die Farbeigenschaften des Lichts ausgenutzt, so gelangt man zur farbkodierten strukturierten Beleuchtung. Hinsichtlich der Schwingungsanfälligkeit bestehen die gleichen Probleme wie beim Spinning Disc oder VivaTome-Verfahren, weshalb auch hier die Erfindung Vorteile bringt.

Um das z-Rastern zu vermeiden, hat sich auf der anderen Seite das chromatisch konfokale Prinzip bewährt. Hier wird in der Regel eine polychromatische Lichtquelle eingesetzt, die die interessierende Probe über ein chromatisch wirkendes refraktives und/oder diffraktives Element beleuchtet, wodurch die z-Information spektral kodiert wird. Wird nun hinter einer konfokalen Lochblende in der Detektion das Spektrum vermessen, so kann hieraus die Höheninformation abgeleitet werden. Auch möglich ist die Verwendung einer durchstimmbaren Lichtquelle mit sequentieller konfokaler Detektion, wodurch ebenfalls ein Spektrum erhalten wird. Zumeist handelt es sich bei den kommerziellen Sensoren um Punktdetektoren, die stets den Nachteil der fehlenden x-y-Parallelisierung aufweisen. Um eine vollständige Topographie zu erfassen, sind mehrere Messungen mit relativer x-y-Verstellung zwischen Probe und Sensor erforderlich. Diese Verstellung kann beispielsweise mit Hilfe einer Strahlablenkeinheit im Sensor erfolgen, so dass die geometrische Ausrichtung zwischen Probe und Sensor während des Messvorgangs konstant bleibt. Im Hinblick auf Stöße und Schwingungsbewegungen während des Messvorgangs leistet die Erfindung Abhilfe.

Es existieren auch Ansätze zu x-y-Parallelisierung des chromatisch konfokalen Prinzips. Eine chromatisch multifokale Anordnung mit Lochblenden-Array ist beispielsweise in DE 10 2007 019 267 A1 und DE 10 2012 009 836 A1 beschrieben. Die Fokalpunkte decken allerdings das Bildfeld nur zum Teil ab, so dass weiterhin eine Rasterbewegung notwendig ist und das Problem von äußeren Einflüssen besteht. Gleiches gilt für linienscannende Systeme. Auf einer Nipkow-Scheibe basierende Systeme wurden bislang überwiegend mit Farbkamera-Systemen realisiert, die nur eine eingeschränkte Höhenauflösung ermöglichen und darüber hinaus Probleme bei Farbobjekten aufweisen, da es hier zu einer Überlagerung von Höhen- und Farbinformation bzw. spektraler Reflektivität kommt. In einem Ansatz wurde eine multifokale chromatische Anordnung mit Hilfe eines DMDs realisiert. Der chromatische Höhenscan wird dabei mit einem durchstimmbaren Titan-Saphir-Laser durchgeführt. In Kombination mit einem Schalten des DMDs ist damit ein Aufbau realisiert, der hochgenaue 3D-Topographie-Daten ohne jegliche mechanische Bewegungselemente ermöglicht. Allerdings liegt durch das Durchstimmen der Lichtquelle auch hier entsprechend den auf einem mechanischen z-Scan basierenden Ansätzen eine sequentielle Bildaufnahme vor, so dass auch hier der störende Einfluss durch externe Schwingungen oder Stöße gegeben ist, der, wie hierin beschrieben, durch die Erfindung erfassbar und quantifizierbar ist.

In DE 10 2012 009 836 A1 sind Lösungsvorschläge für ein chromatisch konfokales Weitfeldmikroskop beschrieben, bei denen ebenfalls eine durchstimmbare Lichtquelle zum Einsatz kommt, weshalb auch hier der beschriebene störende Einfluss gegeben ist. Dieser besteht auch bei den dort beschriebenen Ansätzen, wenn eine breitbandige Lichtquelle in Verbindung mit einem hyperspektraler Bildsensor zum Einsatz kommen soll, der wie beispielsweise im Falle eines FT-Spektrometers oder eines Liniensensors, ebenfalls lediglich sequentiell betrieben werden kann.

Eine Erweiterung zu den chromatisch konfokalen Verfahren ist die chromatisch konfokale Spektralinterferometrie, bei der ähnliche Probleme wie im rein chromatischkonfokalen Fall zutage treten und die mithin ebenfalls von der Erfindung profitieren.

Somit handelt es sich bei den bisher beschriebenen Ansätzen um Mehrschuss-Verfahren, bei denen die Höheninformation nicht aus eine einzige Bildaufnahme ermittelt wird, sondern über mehrere Bildaufnahmen, die hinsichtlich z-Scanposition, xy-Scanposition, Wellenlänge oder Spektrometereinstellung voneinander verschieden sind. In der Regel ist es aber möglich die räumliche Ausrichtung von Probenkörper zu Sensor während des Messvorgangs konstant zu halten.

Der eigentliche Messvorgang, das heißt das mikroskopische Erfassen der Topographie einer Oberfläche mit dem optischen Mikroskop, besteht also in der Regel darin, zum Beispiel mit den oben erwähnten Verfahren von unterschiedlichen Orten in oder auf der Probe zu unterschiedlichen Zeiten Informationen zu gewinnen. Im Unterschied und ergänzend hierzu wird die Referenzmessung mit dem Referenzsensor wiederholend stets an ein und demselben Ort durchgeführt. Bei einem vorteilhaften Ausführungsbeispiel der erfindungsgemäßen Vorrichtung ist demgemäß der Referenzsensor eingerichtet zum Messen von Änderungen des Höhenabstands zwischen dem Mikroskop und einem mit der Probenhalterung starr gekoppelten Referenzpunkt. Dadurch ist eine besonders zuverlässige Bestimmung des Höhenabstands zwischen dem Mikroskop und der Probenhalterung möglich.

Im Hinblick auf die Wahl des Referenzpunkts im Einzelnen bestehen unterschiedliche Möglichkeiten. Bei einer einfachen Variante ist der starr gekoppelte Referenzpunkt ein Punkt auf oder in der Probe. Zweckmäßig ist hierzu die Probenhalterung zum starren Halten einer Probe eingerichtet. Grundsätzlich kann der Referenzpunkt aber auch ein Punkt auf oder an der Probenhalterung sein. Diese Variante kann bevorzugt sein, wenn Proben untersucht werden, bei denen es schwierig ist, einen geeigneten Referenzpunkt zu finden. Freiheit besteht grundsätzlich auch in der konkreten Anordnung des Referenzsensors. Dieser kann entweder an dem Mikroskop oder an der Probenhalterung angeordnet sein. Um eine definierte Messung zu gewährleisten, ist es dabei zweckmäßig, wenn der Referenzsensor entweder an das Mikroskop oder an die Probenhalterung starr gekoppelt ist.

Die Messdaten des Referenzsensors können auf unterschiedliche Weise nutzbringend verwendet werden.

Bei einer besonders bevorzugten Variante ist eine Verstelleinrichtung zum Verstellen eines Höhenabstands zwischen dem Mikroskop und der Probenhalterung vorhanden und die Steuer- und Auswerteeinheit wirkt mit dieser Verstelleinrichtung zusammen und ist zum Durchführen einer aktiven Regelung des Höhenabstands zwischen dem Mikroskop und dem Referenzpunkt eingerichtet. Es wird also auf Grundlage von Messdaten des Referenzsensors eine aktive Regelung des Höhenabstands durchgeführt. Besonders zweckmäßig wird dabei auf einen konstanten Höhenabstand geregelt.

Prinzipiell ist aber ebenso möglich, dass eine gemessene Topographie einer Oberfläche einer Probe mit Hilfe von Messdaten des Referenzsensors im Nachhinein, also nach Messen der genannten Topographie, korrigiert wird. Die Steuer- und Auswerteeinheit ist hierzu erfindungsgemäß eingerichtet zum nachträglichen Korrigieren einer gemessenen Topographie einer Oberfläche einer Probe mit Hilfe von Messdaten des Referenzsensors. In einem einfachen Fall kann die nachträgliche Korrektur in einem Verwerfen oder Weglassen von Messpunkten der Oberflächentopografie bestehen und zwar dann, wenn ein Messwert des Referenzsensors für den Zeitpunkt, zu dem die fragliche Oberflächentopografiedaten aufgenommen wurden, nicht innerhalb eines als zulässig definierten Intervalls liegt. Die zu diesem Messzeitpunkt oder in einem zu definierenden Intervall um diesen Messzeitpunkt erhobenen Oberflächentopografiedaten werden dann nicht berücksichtigt oder, mit anderen Worten, verworfen. Bevorzugt können zum Korrigieren einer gemessenen Oberflächentopographie im Nachhinein die von dem Referenzsensor für einen jeweiligen Messzeitpunkt der Oberflächentopographie gemessenen Änderungen des Höhenabstands mit den zu dem genannten Zeitpunkt erhobenen Oberflächentopographiedaten in einer mathematischen Operation verarbeitet werden. Erfindungsgemäß können zum Korrigieren einer gemessenen Oberflächentopographie im Nachhinein die von dem Referenzsensor für einen jeweiligen Messzeitpunkt der Oberflächentopographie gemessenen Änderungen des Höhenabstands von den zu dem genannten Zeitpunkt erhobenen Oberflächentopographiedaten subtrahiert werden. Wenn also bei der Messung einer Oberflächentopographie in einer Sequenz von Messungen aus irgendeinem Grund sich der Abstand zwischen dem Mikroskop und der Probe erhöht, beispielsweise durch eine mechanische Schwingung, so weisen die erhobenen Oberflächentopographiedaten eine Fehler auf. Sie sind, wenn sich der Abstand vergrößert hat, um eben diese Abstandsvergrößerung zu groß. Durch Subtrahieren der von dem Referenzsensor für den fraglichen Messzeitpunkt erfassten Abstandsänderung, wird dieser Fehler im Nachhinein wieder korrigiert.

Das optische Mikroskop kann grundsätzlich ein optisches Mikroskop bekannter Art sein. Die Vorteile der Erfindung werden in besonderer Weise erreicht, wenn das optische Mikroskop und die damit durchgeführten Mikroskopieverfahren eine endliche Zeitdauer zur Erfassung der Oberflächentopographie einer zu untersuchenden Probe benötigen, je größer, mit anderen Worten, die Wahrscheinlichkeit ist, dass es aufgrund von mechanischen Störungen zu Verfälschungen der Messergebnisse kommt. Beispielsweise kann das Mikroskop einen Scanner, insbesondere einen Punkt- und/oder Linienscanner aufweisen.

Erfindungsgemäß ist das optische Mikroskop zum Durchführen von Mikroskopie mit strukturierter Beleuchtung eingerichtet.

Das optische Mikroskop kann beispielsweise 2. zusätzlich zum Durchführen von Mikroskopie mit strukturierter Beleuchtung zum Durchführen einer oder mehrerer der folgenden mikroskopischen Verfahren eingerichtet sein: Phasenverschiebungsinterferometrie, optische Kohärenztomografie und/oder Phase-Retrieval-Mikroskopie.

Eine Auflösung in Richtung der Höhenkoordinate kann bei optischen Mikroskopen insbesondere durch Ausnutzen von chromatischen Aberrationen erzielt werden. Besonders bevorzugt sind deshalb Verfahrensvarianten, bei denen die Einzelmessungen mit Licht verschiedener Wellenlängen durchgeführt werden. Im Zusammenhang mit dem Referenzsensor kommt es im Prinzip darauf an, dass hierzu ein Messgerät zum Einsatz kommt, mit welchem Änderungen des Höhenabstands zwischen dem Mikroskop und der Probenhalterung mit hinreichender Genauigkeit gemessen werden können. Grundsätzlich können hierfür sehr unterschiedliche Sensoren zum Einsatz kommen. Besonders genaue Abstandsmessungen sind beispielsweise mit kapazitiven Sensoren, mit induktiven Sensoren, Wirbelstromsensoren und/oder mit magneto-induktiven Sensoren möglich.

Alternativ oder ergänzend können auch Beschleunigungssensoren zum Einsatz kommen. Diese können besonders bevorzugt angebracht sein an der Probenhalterung, die beispielswiese ein beweglicher Probentisch grundsätzlich bekannter Art sein kann. Relativbewegungen zwischen Mikroskop und Probenhalterung / Tischsystem können so kontinuierlich erfasst werden.

Besonders bevorzugt werden für die Referenzsensoren optische Sensoren eingesetzt. Dabei kann es sich insbesondere um einen konfokalen Sensor, einen chromatisch konfokalen Sensor, einen interferometrischen Sensor, einen Autofokussensor, einen Triangulationssensor, einen stereoskopischen Abstandssensor, einen Flugzeitsensor, einen Phasenversatz messende optische Sensoren und/oder einen Sensor mit einer Foucault-Schneide handeln.

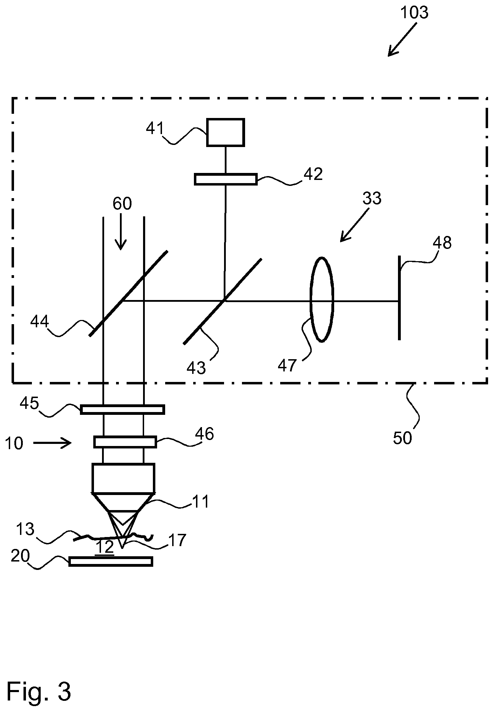

Der erwähnte Autofokussensor kann auch auf dem Prinzip der dynamischen Fokussierung basieren. Dabei wird grundsätzlich eine Höheninformation in eine 2D-Information umgewandelt, was beispielsweise unter Zuhilfenahme eines astigmatischen Elements im Detektionsstrahlengang gelingt. Alternativ kann beispielsweise auch eine Foucault-Schneide in der Detektion verwendet werden. Besonders interessante Ausführungen ergeben sich unter Ausnutzung von besonderen Formungen der Punktverteilungsfunktion, die in US-7,705,970 B2 und US-2011/0310266 A1 beschrieben sind. US-7,705,970 B2 verwendet dabei eine rotatorische Punktverteilungsfunktion in Form einer Doppelhelix, bei der aus der geometrischen Ausrichtung der beiden Helix-Querschnitte zueinander eine Höheninformation abgeleitet werden kann. Auf dieses Prinzip wird im Zusammenhang mit Figur 3 noch detaillierter eingegangen.

Ein besonders kompakter Aufbau kann erzielt werden, wenn der Referenzsensor 2. erfindungsgemäß ein optischer Sensor ist und der Referenzsensor und das Mikroskop gemeinsame Optikmittel, insbesondere wie erfindungsgemäß ein gemeinsames Objektiv, aufweisen. Beispielsweise kann ein Abtaststrahl eines als Referenzsensor wirkenden optischen Sensors über einen Strahlteiler in den Strahlengang des optischen Mikroskops eingekoppelt werden. Erfindungsgemäß wird der Abtaststrahl des optischen Referenzsensors mit dem Objektiv des Mikroskops auf die Probe geleitet.

Weitere Vorteil und Merkmale der vorliegenden Erfindung werden mit Bezug auf die beigefügten Figuren erläutert. Hierin zeigen:
- Fig. 1:: eine schematische Darstellung eines ersten Ausführungsbeispiels einer Vorrichtung;
- Fig. 2:: eine schematische Ansicht eines zweiten Ausführungsbeispiels einer Vorrichtung; und
- Fig. 3:: eine schematische Ansicht eines dritten Ausführungsbeispiels einer erfindungsgemäßen Vorrichtung.

Gleiche oder gleich wirkende Komponenten sind in den Figuren in der Regel mit denselben Bezugszeichen gekennzeichnet.

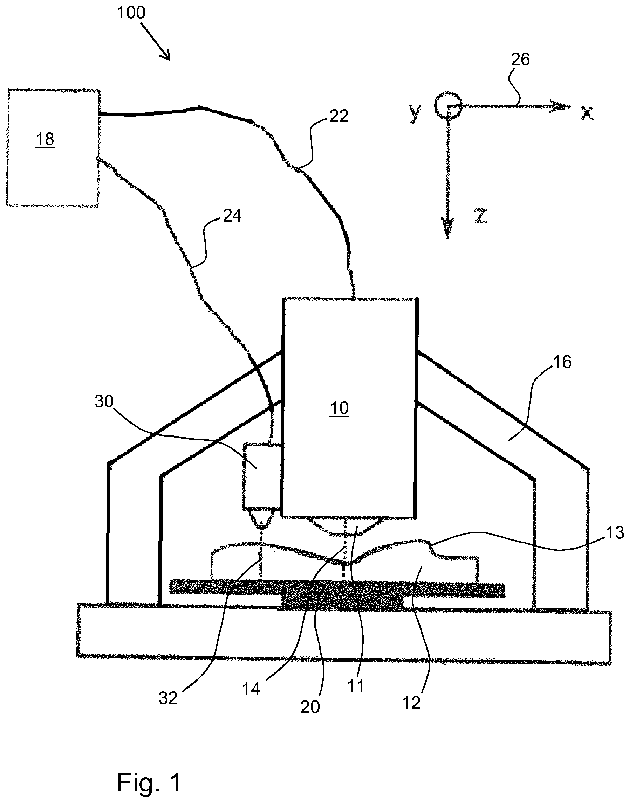

Ein erstes Ausführungsbeispiel einer Vorrichtung wird mit Bezug auf Fig. 1 erläutert. Gezeigt ist dort eine erfindungsgemäße Vorrichtung 100, die als wesentliche Komponenten ein optisches Mikroskop 10 mit einem Mikroskopobjektiv 11 und einer optischen Achse 14, eine Probenhalterung 20 und einen Referenzsensor 30 aufweist. Das optische Mikroskop 10 und der Referenzsensor 30 sind über Verbindungsleitungen 22, 24 mit einer Steuer- und Auswerteeinrichtung 18 verbunden, welche das Mikroskop 10 und den Referenzsensor 30 ansteuert und jeweils Messdaten ausliest. Das Mikroskop 10, der Referenzsensor 30 und die Probenhalterung 20 mit einer darauf angeordneten Probe 12 befinden sich in einem Gehäuse 16. Bei der Probenhalterung 20 handelt es sich um einen Probentisch prinzipiell bekannter Art. Im gezeigten Ausführungsbeispiel handelt es sich bei dem Referenzsensor 30 um einen optischen Sensor, beispielsweise um einen Triangulationssensor. Während der Abfolge von Einzelmessungen, die mit dem Mikroskop 10 zur Gewinnung einer Oberflächentopographie einer Oberfläche 13 der Probe 12 durchgeführt werden, werden zur Durchführung des erfindungsgemäßen Verfahrens mit dem Referenzsensor 30 wiederkehrend Abstandsmessungen durchgeführt. Dabei wird der Abstand zu einem Referenzpunkt 32 auf der Probenoberfläche 13 der Probe 12 gemessen. Weil dieser Referenzpunkt 32 über die Zeitdauer der Abfolge von Einzelmessungen immer derselbe ist, können durch diese Abstandsmessungen mit dem Referenzsensor 30 eventuell auftretende Bewegungen, also Abstandsänderungen ermittelt und bei der Datenauswertung berücksichtigt oder für eine aktive Abstandsregelung herangezogen werden.

Mit dem Bezugszeichen 26 ist in Fig. 1 ein Koordinatensystem dargestellt. Die z-Achse ist dabei parallel zur optischen Achse 14 des Objektivs 11 des optischen Mikroskops 10 und entspricht der Höhenrichtung, in welcher eine Topographie der Oberfläche 13 der Probe 12 ermittelt wird. Diese Höhenrichtung z ist auch die Richtung, in welcher der Referenzsensor 30 einen Abstand oder jedenfalls Abstandsänderungen zu dem Referenzpunkt 32 auf der Probe misst. Der Referenzsensor 30/31 kann bevorzugt Messdaten während des gesamten Messvorgangs des Mikroskops 10 erheben, so dass jegliche Abstandsänderungen aufgrund von Störungen erfasst werden können.

Das optische Mikroskop 10 kann im Prinzip ein Säulensystem oder auch, wie in Fig. 1 schematisch gezeigt, ein Portalsystem sein. Möglich ist außerdem, dass das optische Mikroskop 10 als Komponente an einer Koordinatenmessmaschine oder an einem Roboterarm zum Einsatz kommt.

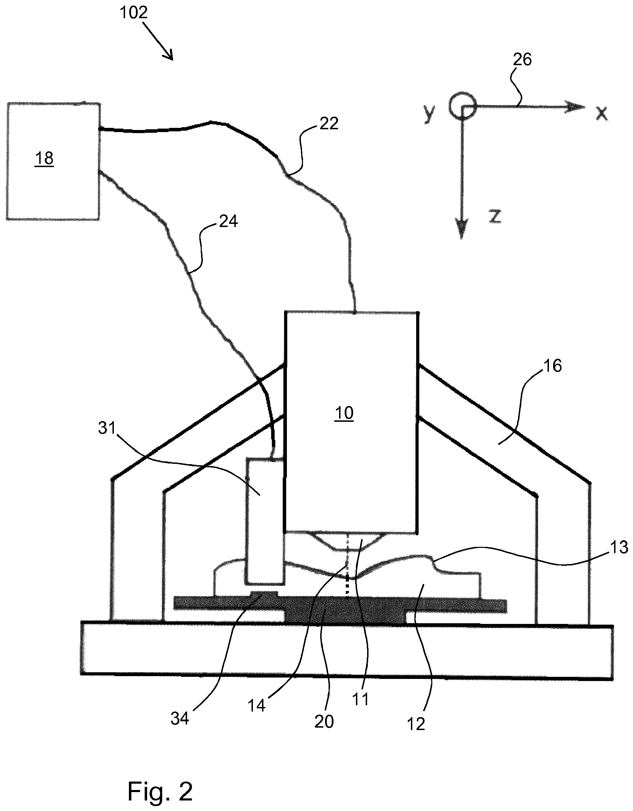

Bei dem in Fig. 2 gezeigten zweiten Ausführungsbeispiel einer Vorrichtung 102 ist, abweichend von der in Fig. 1 dargestellten Variante ein Referenzsensor 31 auf einen Referenzpunkt 34 auf der Probenhalterung 20 gerichtet. Prinzipiell kann der Referenzsensor 31 ebenfalls ein optischer Sensor, beispielsweise ein Triangulationssensor sein. Die grundsätzliche Wirkungsweise der Vorrichtung 102 aus Abbildung 2 entspricht derjenigen der Vorrichtung 100 aus Fig. 1. Den Abstand zwischen dem Mikroskop 10 und der Probenhalterung 20 über einen Referenzpunkt 34 auf der Probenhalterung 20 zu messen, kann dann vorteilhaft sein, wenn es sich als schwierig erweist, einen geeigneten Referenzpunkt auf oder an einer zu untersuchenden Probe zu ermitteln. Beispielsweise kann das der Fall sein, wenn die Probe praktisch überall auf ihrer Oberfläche sehr rau ist und deshalb eine hinreichende Konstanz des Referenzpunkts aufgrund von mechanischen Störungen nicht gewährleistet werden kann.

Zu den im Folgenden beschriebenen Ausführungsbeispielen wird auf DE 10 2012 009 836 A1 verwiesen. Die dort beschriebenen Mikroskope und mikroskopischen Verfahren werden durch Bezugnahme zum Gegenstand dieser Anmeldung gemacht. Bei einem Ausführungsbeispiel des Mikroskops (siehe DE 10 2012 009 836 A1, Figur 1) ist zunächst ein strukturiertes Element vorhanden, welches in einer zur Probenebene konjugierten Ebene angeordnet ist. In einem einfachen Fall stellt das strukturierte Element eine transmittive ein- oder zweidimensionale Gitterstruktur dar. Diese Struktur wird über refraktiv und/oder diffraktiv wirkende chromatische Elemente in den Probenraum abgebildet, so dass hier eine chromatische Aufspaltung generiert wird, das heißt, der Fokus verschiebt sich abhängig von der Wellenlänge in z-Richtung. Es existiert eine polychromatische Lichtquelle (Laser, Halogenlampe, Superlumineszenz-Diode), bei der im zunächst beschriebenen Ausführungsbeispiel eine Wellenlänge durch ein selektives Element ausgewählt werden kann. Dieses selektive Element kann beispielsweise ein AOTF, ein Prisma, ein Gitter oder auch eine Filterselektionseinheit sein. Das Licht kann dann durch eine Ablenkeinheit in eine unterschiedliche Richtung abgelenkt werden. Die Ablenkeinheit kann beispielsweise ein schnell schaltbarer Spiegel (z.B. Galvo-Spiegel), ein AOD oder eine auf Polarisationsdrehung basierende Schalteinheit sein. Optional kann auch eine Polarisationsfilterung vorgenommen werden kann. Durch die Ablenkeinheit ist es möglich, das Gitter mit Hilfe einer Kollimationslinse von zwei Seiten sequentiell zu beleuchten. Ist die Gitterstruktur verspiegelt ausgeführt, so werden dementsprechend zwei Gitterphasen in den Probenraum abgebildet. Zur Vereinigung des Transmissions- und Reflexionsstrahlengangs kann ein Strahlteiler verwendet werden. Das Licht wird dann durch einen Strahlteiler weiter zur Probe geführt, wobei der Strahlteiler vorteilhafterweise als Polarisationsstrahlteiler ausgeführt ist. Es kann weiterhin eine lambda/4-Platte im Strahlengang angeordnet sein, so dass das zur Probe gehende und von der Probe reflektierte, zu detektierende Licht eine um 90° zueinander verdrehte Polarisation aufweisen und so gut voneinander abgetrennt werden können. Weiterhin ist es mit einer solchen Konfiguration möglich, störende Reflexionen, die von den optischen Elementen des Sensors und nicht von der Probe herrühren, zu unterdrücken. Hierzu kann weiterhin vor der Detektionskamera ein Polarisationsfilter angeordnet sein.

Es ist somit gemäß diesem Ausführungsbeispiel möglich, unterschiedliche Gitterphasen auf die Probe abzubilden und zu detektieren. Gleichzeitig kann dabei die Wellenlänge durchgestimmt werden, was einer Rasterung in z-Richtung entspricht. Wird für jedes Pixel der Modulationskontrast in Abhängigkeit von der Wellenlänge ausgewertet, so erhält man den entsprechenden Höhenwert der Probe. Der Modulationskontrast ist bei der Wellenlänge am stärksten ausgeprägt, deren z-Fokusposition mit der Probenoberfläche übereinstimmt. Alternativ kann natürlich auch ein optisches Schnittbild für jede Wellenlänge mit den gängigen Verfahren der strukturierten Beleuchtung berechnet werden, und es wird für jedes Pixel das Maximum der Intensität des Schnittbilds über der Wellenlänge ermittelt. Es versteht sich von selbst, dass das System dabei hinsichtlich der spektralen Eigenschaften von Lichtquelle, Optik und Detektoreinheit hinreichend kalibriert sein muss.

In einer anderen Variante wird die Struktur, die auch ein 2D-Pinhole-Array (Pinhole = Lochblende) darstellen kann, auf verschiedene Positionen bewegt und es werden mit einer Kamera entsprechende Bilder aufgenommen, wobei hier aber nur jeweils ein Lichtkanal der Beleuchtung verwendet wird. Die Kamera kann gleichsam als digitales Pinhole verwendet werden, so dass ein echt konfokales Bild durch Verrechnen und Zusammensetzen der bei den einzelnen Positionen aufgenommenen Bilder erhalten wird (dies entspricht beispielsweise dem Zeiss CSM 700). Auch hier kann dann durch Auftragen der Intensität über die Wellenlänge die Höheninformation abgeleitet werden.

In einer weiteren Variante entfällt das strukturierte Element komplett und es wird jeweils nur für jeden lokalen Bildbereich eine Schärfefunktion über die Wellenlänge ermittelt. Dies entspricht dem Prinzip der Fokusvariation. Bei hinreichend strukturierten Proben reicht auch dies aus, um Höheninformationen zu erhalten.

Ähnlich gestaltet sich ein Aufbau, der nach dem Prinzip des HiLo-Verfahrens funktioniert. Das strukturierte Element kann hier auch ein Element zu gezielten Einführung eines Speckle-Patterns darstellen, welches komplett aus dem Strahlengang entfernt werden kann.

Wichtig im Sinn der Erfindung ist, dass zur Erfassung der Höhenwerte sequentielle Aufnahmen notwendig sind. Zum einen werden bei Verwendung einer Gitterstruktur beispielsweise unterschiedliche Gitterphasen auf die Probe abgebildet und hintereinander detektiert. Zum anderen wird die Wellenlänge durchgestimmt, um unterschiedliche z-Positionen im Probenraum zu erfassen. Von Bedeutung ist, dass hierbei stets die räumliche Beziehung zwischen Probenoberfläche und Detektoreinheit bestehen bleibt, das heißt, die Probe wird relativ zum Mikroskop nicht bewegt. Äußere Einflüsse können aber zu einer ungewollten Bewegung und auch somit einer Abstandänderung während des Messvorgangs führen, wodurch Artefakte auftreten können. Mit Hilfe des erfindungsgemäßen Referenzsensors 30/31 ist es nun möglich, solche Abstandänderungen zu erfassen. Beispielsweise kann der Referenzsensor 30/31 parallel zu jeder Wellenlänge bzw. z-Aufnahme des Mikroskops 10 ausgelesen werden. Wird eine Abstandänderung festgestellt, so kann diese direkt im Messergebnis passiv berücksichtigt werden. Eine weitere Möglichkeit ist, auf die Abstandänderung aktiv zu reagieren, indem beispielsweise der relative Abstand zwischen der Probe 12 und dem Mikroskop 10 z.B. mit Hilfe eines beweglichen Tischsystems als Probenhalterung 20 geändert wird.

Ein typischer Messablauf kann beispielsweise folgendermaßen aussehen:
1. Einstellen des optimalen Messabstands zwischen der Probe 12 und dem Mikroskop 10. Hierzu kann ein Signal des Mikroskops 10 selbst oder aber ein Signal des Referenzsensors 30/31 verwendet werden.
2. Durchführen der Messung bei nominal konstantem Abstand zwischen der Probe 12 und dem Mikroskop 10 und gleichzeitiges Auslesen des Referenzsensors 30/31, mit:
2a. Berücksichtigen der Werte Referenzsensors 30/31 bei der Auswertung der Oberflächentopographie der Probe 12
   oder
2b. Korrektur des Messabstands während der Messung anhand der Messwerte des Referenzsensors 30/31.

Ein weiteres Ausführungsbeispiel (DE 10 2012 009 836 A1, Figur 2) für das Mikroskop kombiniert das Zeiss VivaTome mit der chromatisch konfokalen Technologie. In einer Zwischenbildebene ist dabei eine rotierende Scheibe mit einer verspiegelten Strukturierung eingeführt. Das von der Probe zurückreflektierte Licht wird in zwei Kamera-Kanälen detektiert, welche jeweils einer Transmission bzw. einer Reflexion an der rotierende Scheibe entsprechen. Aus den beiden Bildern kann in Abhängigkeit von der Wellenlänge sowohl ein Weitfeld-Bild als auch ein konfokales Bild errechnet werden. Wiederum ergibt sich aus der Intensität als Funktion der Wellenlänge die gesuchte Höheninformation für jedes Detektionspixel. Auch hier wird in einer bevorzugten Variante die Wellenlänge durchgestimmt, so dass mehrere Einzelaufnahmen bei konstantem Abstand des Mikroskops zur Probe erforderlich sind. Durch das Auslesen des Referenzsensors wird sichergestellt, dass hierbei keine Artefakte auftreten.

Bei einem weiteren Ausführungsbeispiel für das Mikroskop im Sinn der chromatisch konfokalen Technologie kommt ein bewegliches Lochblenden-Array bzw. eine Nipkow-Scheibe zum Einsatz. Im Extremfall besteht das Lochblenden-Array nur aus einer Lochblende. Eine Erfassung der gesamten Probenoberfläche wird durch eine Bewegung (Rotation, Verschiebung) des Lochblenden-Arrays erreicht. Die spektrale Information bzw. die hiermit gekoppelte Höheninformation kann entweder mit Hilfe einer durchstimmbaren Lichtquelle oder aber mit einer breitbandigen Lichtquelle und spektraler Detektion erhalten werden. Im Fall der einfachen Lochblende kann das Spektrometer mit Hilfe eines Zeilensensors realisiert werden. In jedem Fall werden mindestens durch die Bewegung des Arrays mehrere Einzelmessungen benötigt, so dass auch hier die erfindungsgemäße Referenzmessung sinnvoll ist.

Statt eines beweglichen Lochblenden-Arrays kann auch ein nichtbewegliches Lochblenden-Array zum Einsatz kommen, wobei die Bewegung der Abbildung desselben relativ zur Probenoberfläche mit Hilfe einer Scaneinheit realisiert wird.

Ein besonders bevorzugtes Ausführungsbeispiel einer erfindungsgemäßen Vorrichtung 103 schließlich ist in Fig. 3 dargestellt. Gezeigt ist dort ein Mikroskopobjektiv 11 eines optischen Mikroskops, über welches unter Einsatz von Licht 60 von einer in Fig. 3 nicht dargestellten Lichtquelle optische Mikroskopieverfahren, beispielsweise konfokale Scanningmikroskopie, durchgeführt wird. Ein Referenzsensor 33 benutzt in dem in Fig. 3 gezeigten Beispiel ebenfalls das Mikroskopobjektiv 11. Bei dem Referenzsensor 33 handelt es sich um einen chromatisch konfokalen Sensor, bei dem Licht einer polychromatischen Lichtquelle 41 über Strahlteiler 43 und 44 in den mikroskopischen Strahlengang eingekoppelt und mit dem Mikroskopobjektiv 11 in die Probe 12 oder auf deren Oberfläche geleitet wird. Mit dem Bezugszeichen 17 ist in Fig. 3 eine chromatische Aufspaltung im Probenraum des Anregungslichts dargestellt. Das von der Probe zurückgestrahlte Licht der Lichtquelle 41 gelangt zunächst auf demselben Strahlengang zurück, wird vom Strahlteiler 43 wenigstens teilweise durchgelassen und erreicht schließlich über eine Linse 47 einen Detektor 48. Während bei den im Zusammenhang mit den Figuren 1 und 2 beschriebenen Vorrichtungen zusätzlich zum optischen Mikroskop ein externer Referenzsensor vorhanden ist, ist bei dem in Fig. 3 gezeigten Ausführungsbeispiel der Referenzsensor als eine interne Referenzmesseinheit integriert. Wie auch bei den Varianten aus Fig. 1 und 2 kommt es dabei darauf an, dass jede Referenzmessung möglichst genau gleichartig, das heißt möglichst am gleichen Ort mit gleicher Wellenlänge und gleichen Detektionseigenschaften, durchgeführt wird. Auch hier sind die verschiedensten optischen Sensoren als Referenzsensoren möglich, wobei der optische Strahlengang zumindest teilweise mit dem Strahlengang des optischen Mikroskops übereinstimmt.

Bei der Anordnung in Figur 3 kann beispielsweise auch ein Referenzsensor zum Einsatz kommen, bei dem eine doppelhelixartige Punktverteilungsfunktion mit Hilfe von Phasenelementen generiert wird. Das ist beispielsweise beschrieben in US-7,705,970 B2. Über Strahlteiler 43, 44 wird dabei eine monochromatische Lichtquelle 41 kollimiert als Referenzstrahl in den Strahlengang des optischen Mikroskops 10 mit seinem Objektiv 11 eingekoppelt und auf die Probenoberfläche 13 abgebildet. Dabei kann der Messpunkt bevorzugt so gewählt werden, dass er knapp außerhalb eines interessierenden Messbereichs am Rand des Bildfelds lokalisiert ist. Das ist aber nicht zwingend, so dass sich der Messpunkt auch innerhalb des interessierenden Messbereichs befinden kann. In jedem Fall sollte aber der Abstand zwischen dem Mikroskopobjektiv 11 und der Probenoberfläche 13 beziehungsweise die Farbe der Lichtquelle so gewählt werden, dass das Licht des Referenzstrahls annähernd auf die Probenoberfläche fokussiert wird. Das muss insbesondere bei Verwendung eines chromatischen Messobjektivs im Messablauf berücksichtigt werden. Die Farbe kann insbesondere auch so gewählt werden, dass sie nicht in den Spektralbereich des Lichts 60 fällt, welches zur Erfassung der Oberflächentopographie durch das optische Mikroskop 10 benutzt wird. Beispielsweise kann für den Referenzsensor Infrarotlicht verwendet werden. Dabei muss natürlich gewährleistet sein, dass das Objektiv 11 auch in diesem Wellenlängenbereich eine hinreichend große Transmission aufweist.

Eine Besonderheit des Referenzstrahlengangs besteht darin, dass in der Beleuchtung ein Phasenelement 42 zum Einsatz kommt, welches so gestaltet ist, dass die Fokussierung mit Hilfe des Objektivs 11 eine doppelhelixartige Punktverteilungsfunktion im Probenraum erzeugt. Die laterale Ausrichtung der Doppelhelix hängt empfindlich vom Abstand zwischen dem Objektiv 11 und der Probenoberfläche 13 ab und kann nach Rückreflektion als Bild auf der Sensoroberfläche 48 erfasst werden. Dabei kann der Detektor 48 vorteilhafterweise als Quadrantendiode ausgeführt sein.

Werden nun die Messsignale des Detektors 48 gleichzeitig mit den zur Erfassung der Oberflächentopographie notwendigen sequentiellen Einzelmessungen des optischen Mikroskops 10 ausgelesen, so können, wie oben beschrieben, störende Bewegungen erfasst und/oder korrigiert werden. Prinzipiell ist auch möglich, dass das Phasenelement 42 an einer anderen Stelle, beispielsweise im Detektionsstrahlengang, platziert ist. Optional können außerdem eine Lambda/4-Platte 45 zur Drehung der Polarisation und/oder ein DOE (diffraktives optisches Element) oder ein anderes Element zur Einführung einer chromatischen Aberration im Strahlengang positioniert sein.

Es wird darauf hingewiesen, dass neben dem beschriebenen Einsatz in einem chromatisch konfokalen Messsystem auch andere Messsysteme möglich sind, die sich dadurch auszeichnen, dass der Abstand zwischen Probe und Messkopf bei der Durchführung unterschiedlicher notwendiger Einzelmessungen nicht verändert wird. Hier sind beispielsweise denkbar:
1. Phase-Shifting-Interferometry
2. Optische Kohärenztomographie
3. Messsysteme mit strukturierter Beleuchtung, bei denen für den Messvorgang das Beleuchtungsmuster geändert werden muss: Streifenprojektion, ApoTome
4. Messsysteme, bei denen Intensitätsinformationen bei unterschiedliche Sensorpositionen verrechnet werden, die sequentiell erhalten werden: Phase Retrieval
5. Photometrie mit unterschiedlichen Schattenbildern
6. Rotational Lateral Shearing (Höheninformation aus DIC-Bildern mit unterschiedlichen Shearrichtungen)

Mit der vorliegenden Erfindung wird eine neuartige Vorrichtung und ein neuartiges Verfahren bereitgestellt, mit welchen eine Gesamt-Topographie einer Oberfläche einer zu untersuchenden Probe optisch mit aus dem Stand der Technik bekannten Methoden bei nominal konstantem Abstand und fixierter Ausrichtung zwischen dem optischen Sensor und der Oberflächenprobe erfasst wird. Während des Messvorgangs wird dabei ein Referenzsignal mit erfasst, welches empfindlich ist für Abstandsänderungen zwischen dem Probenkörper und dem optischen Sensor, das heißt dem optischen Mikroskop. Das Referenzsignal wird aktiv oder passiv zur Korrektur der Topographiemessdaten herangezogen.

## Patentansprüche

1. Vorrichtung zur Erfassung von Oberflächentopographien mit einem optischen Mikroskop (10) eingerichtet zum mikroskopischen Erfassen einer Topographie einer Oberfläche (13) einer Probe (12) in Richtung einer Höhenkoordinate (z) in einer zeitlichen Abfolge von Einzelmessungen und mit einer Probenhalterung (20) zum Halten der Probe (12),
wobei das Mikroskop (10) zum Durchführen von Mikroskopie mit strukturierter Beleuchtung eingerichtet ist, wobei ein optischer Referenzsensor (30, 31) vorhanden ist eingerichtet zum Messen von Änderungen eines Höhenabstands zwischen dem Mikroskop (10) und der Probenhalterung (20), wobei der Referenzsensor und das Mikroskop (10) ein gemeinsames Objektiv (11) aufweisen, wobei eine Steuer- und Auswerteeinheit (18) vorhanden ist zum Verarbeiten von Messdaten des Mikroskops (10) und des Referenzsensors (30, 31), wobei die Steuer- und Auswerteeinheit (18) eingerichtet ist zum nachträglichen Korrigieren einer gemessenen Topographie einer Oberfläche (13) einer Probe (12) mit Hilfe von Messdaten des Referenzsensors (30, 31) und wobei die Steuer- und Auswerteeinheit (18) eingerichtet ist zum Korrigieren einer gemessenen Oberflächentopographie dadurch, dass die von dem Referenzsensor (30, 31) für einen jeweiligen Messzeitpunkt der Messung der Oberflächentopographie gemessenen Änderung des Höhenabstands von den gemessenen Oberflächentopographiedaten subtrahiert werden.

2. Vorrichtung nach Anspruch 1, wobei der Referenzsensor (30, 31) eingerichtet ist zum Messen von Änderungen des Höhenabstands zwischen dem Mikroskop (10) und einem mit der Probenhalterung (20) starr gekoppelten Referenzpunkt.

3. Vorrichtung nach Anspruch 2, wobei die Probenhalterung (20) zum starren Halten einer Probe (12) eingerichtet ist und dass der starr gekoppelte Referenzpunkt ein Punkt auf oder in der Probe (12) ist.

4. Vorrichtung nach Anspruch 2, wobei der Referenzpunkt ein Punkt (34) auf oder an der Probenhalterung (20) ist.

5. Vorrichtung nach einem der Ansprüche 1 bis 4, wobei der Referenzsensor (30, 31) entweder an das Mikroskop (10) oder an die Probenhalterung (20) starr gekoppelt ist.

6. Vorrichtung nach einem der Ansprüche 1 bis 5, wobei das Mikroskop (10) zusätzlich zum Durchführen von Mikroskopie mit strukturierter Beleuchtung zum Durchführen einer oder mehrerer der folgenden mikroskopischen Verfahren eingerichtet ist: optische Kohärenztomographie und/oder Phase-Retrieval-Mikroskopie.

7. Vorrichtung nach einem der Ansprüche 1 bis 6, wobei der Referenzsensor (30, 31) einen kapazitiven Sensor und/oder einen induktiven Sensor aufweist.

8. Vorrichtung nach einem der Ansprüche 1 bis 7, wobei der Referenzsensor (30, 31) mindestens einen Beschleunigungssensor aufweist.

9. Vorrichtung nach einem der Ansprüche 1 bis 8, wobei der Referenzsensor (30, 31) mindestens einen konfokalen Sensor, einen chromatisch konfokalen Sensor, einen interferometrischen Sensor, einen Autofokussensor, einen Triangulationssensor und/oder einen Sensor mit einer Foucault-Schneide aufweist.

10. Verfahren zur Erfassung von Oberflächentopographien,
bei dem von einer Oberfläche (13) einer Probe (12) in einer zeitlichen Abfolge von Einzelmessungen mit einem optischen Mikroskop (10), welches zum Durchführen von Mikroskopie mit strukturierter Beleuchtung eingerichtet ist, eine Topographie der Oberfläche (13) in Richtung einer Höhenkoordinate (z) erhalten wird, wobei während der zeitlichen Abfolge von Einzelmessungen mit einem optischen Referenzsensor (30, 31) Änderungen eines Höhenabstands zwischen dem Mikroskop (10) und einer Probehalterung (20) wiederholt bestimmt werden, wobei ein Abtaststrahl des Referenzsensors mit dem Objektiv (11) des Mikroskops (10) auf oder in die Probe (12) geleitet wird und wobei eine gemessene Topographie einer Oberfläche (13) einer Probe (12) mit Hilfe von Messdaten des Referenzsensors (30, 31) im Nachhinein korrigiert wird und wobei zum Korrigieren einer gemessenen Oberflächentopographie im Nachhinein die von dem Referenzsensor für einen jeweiligen Messzeitpunkt der Oberflächentopographie gemessenen Änderungen des Höhenabstands von den für diesen Zeitpunkt gemessenen Oberflächentopographiedaten subtrahiert werden.

11. Verfahren nach Anspruch 10, wobei die Einzelmessungen jeweils mit Licht verschiedener Wellenlänge durchgeführt werden.

## Claims

1. Device for detecting surface topographies, having an optical microscope (10) configured for detecting a topography of a surface (13) of a sample (12) in the direction of a vertical coordinate (z) in a temporal sequence of individual measurements by microscopy and having a sample holder (20) for holding the sample (12),
wherein the microscope (10) is configured for carrying out structured illumination microscopy,
wherein an optical reference sensor (30, 31) is present, configured for measuring changes in a vertical distance between the microscope (10) and the sample holder (20),
wherein the reference sensor and the microscope (10) have a common objective (11),
wherein a control and evaluation unit (18) is present for processing measurement data of the microscope (10) and of the reference sensor (30, 31),
wherein the control and evaluation unit (18) is configured for subsequently correcting a measured topography of a surface (13) of a sample (12) with the aid of measurement data of the reference sensor (30, 31) and
wherein the control and evaluation unit (18) is configured for correcting a measured surface topography by virtue of the changes in the vertical distance, measured by the reference sensor (30, 31) for a respective measurement time of the measurement of the surface topography, being subtracted from the measured surface topography data.

2. Device according to Claim 1,
wherein the reference sensor (30, 31) is configured for measuring changes in the vertical distance between the microscope (10) and a reference point that is rigidly coupled to the sample holder (20) .

3. Device according to Claim 2,
wherein the sample holder (20) is configured for rigidly holding a sample (12) and wherein the rigidly coupled reference point is a point on or in the sample (12).

4. Device according to Claim 2,
wherein the reference point is a point (34) on or at the sample holder (20).

5. Device according to any of Claims 1 to 4,
wherein the reference sensor (30, 31) is rigidly coupled either to the microscope (10) or to the sample holder (20).

6. Device according to any of Claims 1 to 5,
wherein, in addition to carrying out structured illumination microscopy, the microscope (10) is configured for carrying out one or more of the following microscopic methods:
optical coherence tomography and/or
phase retrieval microscopy.

7. Device according to any of Claims 1 to 6,
wherein the reference sensor (30, 31) has a capacitive sensor and/or an inductive sensor.

8. Device according to any of Claims 1 to 7,
wherein the reference sensor (30, 31) has at least one accelerometer.

9. Device according to any of Claims 1 to 8,
wherein the reference sensor (30, 31) has at least one confocal sensor, one chromatic confocal sensor, one interferometric sensor, one autofocus sensor, one triangulation sensor and/or one sensor with a Foucault knife-edge.

10. Method for detecting surface topographies,
wherein, from a surface (13) of a sample (12), a topography of the surface (13) is obtained in the direction of a vertical coordinate (z) in a temporal sequence of individual measurements by means of an optical microscope (10) which is configured for carrying out structured illumination microscopy,
wherein changes in a vertical distance between the microscope (10) and a sample holder (20) are repeatedly determined by means of an optical reference sensor (30, 31) during the temporal sequence of individual measurements,
wherein a scanning beam of the reference sensor is guided onto or into the sample (12) by means of the objective (11) of the microscope (10) and
wherein a measured topography of a surface (13) of a sample (12) is retrospectively corrected with the aid of measurement data of the reference sensor (30, 31) and
wherein the changes in the vertical distance, measured by the reference sensor for a respective measurement time of the surface topography, are subtracted from the surface topography data measured for said time for retrospectively correcting a measured surface topography.

11. Method according to Claim 10,
wherein the individual measurements are each carried out with light of different wavelengths.

## Revendications

1. Dispositif de détection de topographies de surface comportant un microscope optique (10) conçu pour détecter par microscopie la topographie d'une surface (13) d'un échantillon (12) dans la direction d'une coordonnée de hauteur (z) dans une séquence temporelle de mesures individuelles et un porte-échantillon (20) destiné à maintenir l'échantillon (12),
dans lequel le microscope (10) est conçu pour effectuer une microscopie au moyen d'un éclairage structuré,
dans lequel il est prévu un capteur optique de référence (30, 31), conçu pour mesurer des variations de la distance en hauteur entre le microscope (10) et le porte-échantillon (20),
dans lequel le capteur de référence et le microscope (10) comportent un objectif commun (11),
dans lequel il est prévu une unité de commande et d'évaluation (18) destinée à traiter des données de mesure provenant du microscope (10) et du capteur de référence (30, 31),
dans lequel l'unité de commande et d'évaluation (18) est conçue pour corriger ultérieurement une topographie mesurée d'une surface (13) d'un échantillon (12) à l'aide de données de mesure provenant du capteur de référence (30, 31) et
dans lequel l'unité de commande et d'évaluation (18) est conçue pour corriger une topographie de surface mesurée en soustrayant aux données de topographie de surface mesurées la variation de la distance en hauteur mesurée par le capteur de référence (30, 31) pour un instant de mesure respectif de la mesure de la topographie de surface.

2. Dispositif selon la revendication 1,
dans lequel le capteur de référence (30, 31) est conçu pour mesurer des variations de la distance en hauteur entre le microscope (10) et un point de référence couplé de manière rigide au porte-échantillon (20).

3. Dispositif selon la revendication 2,
dans lequel le porte-échantillon (20) est conçu pour maintenir de manière rigide un échantillon (12) et dans lequel le point de référence couplé de manière rigide est un point sur ou dans l'échantillon (12).

4. Dispositif selon la revendication 2,
dans lequel le point de référence est un point (34) sur le porte-échantillon (20) ou au niveau de celui-ci.

5. Dispositif selon l'une des revendications 1 à 4,
dans lequel le capteur de référence (30, 31) est couplé de manière rigide soit au microscope (10) soit au porte-échantillon (20) .

6. Dispositif selon l'une des revendications 1 à 5,
dans lequel le microscope (10) est en outre conçu pour effectuer une microscopie au moyen d'un éclairage structuré afin de mettre en œuvre un ou plusieurs des procédés de microscopie suivants :
tomographie à cohérence optique et/ou
microscopie à extraction de phase.

7. Dispositif selon l'une des revendications 1 à 6,
dans lequel le capteur de référence (30, 31) comporte un capteur capacitif et/ou un capteur inductif.

8. Dispositif selon l'une des revendications 1 à 7,
dans lequel le capteur de référence (30, 31) comporte au moins un capteur d'accélération.

9. Dispositif selon l'une des revendications 1 à 8,
dans lequel le capteur de référence (30, 31) comporte au moins un capteur confocal, un capteur confocal chromatique, un capteur interférométrique, un capteur à mise au point automatique, un capteur à triangulation et/ou un capteur à lame de Foucault.

10. Procédé de détection de topographies de surface,
selon lequel une topographie d'une surface (13) d'un échantillon (12) est obtenue dans la direction d'une coordonnée de hauteur (z) dans une séquence temporelle de mesures individuelles au moyen d'un microscope optique (10), qui est conçu pour effectuer une microscopie au moyen d'un éclairage structuré,
dans lequel, au cours de la séquence temporelle de mesures individuelles, des variations de distance en hauteur entre le microscope (10) et un porte-échantillon (20) sont déterminées de manière répétée au moyen d'un capteur optique de référence (30, 31),
dans lequel un faisceau de balayage du capteur de référence est guidé au moyen de l'objectif (11) du microscope (10) sur ou dans l'échantillon (12) et
dans lequel une topographie mesurée d'une surface (13) d'un échantillon (12) est corrigée ultérieurement à l'aide de données de mesure provenant du capteur de référence (30, 31) et
dans lequel, pour corriger une topographie de surface mesurée, les variations de la distance en hauteur mesurées par le capteur de référence pour un instant de mesure respectif de la topographie de surface sont ensuite soustraites aux données de topographie de surface mesurées pour cet instant.

11. Procédé selon la revendication 10,
dans lequel les mesures individuelles sont respectivement effectuées au moyen d'une lumière présentant différentes longueurs d'onde.
